# EUROPÄISCHE PATENTANMELDUNG

(11) **EP 2 287 079 A2**
(43) Veröffentlichungstag der Anmeldung: **23.02.2011**
(21) Anmeldenummer: 10008123.1
(22) Anmeldetag: 04.08.2010
(51) Int. Cl.: B65B 21/06, B65B 35/44

(54) **Vorrichtung zum Gruppieren und/oder Vereinzeln von Artikeln**

(30) Priorität: 18.08.2009 DE 102009026395
(71) Anmelder: Krones AG, 93073 Neutraubling (DE)
(72) Erfinder: Fischbacher, Markus, 83064 Raubling (DE)
(74) Vertreter: Benninger, Johannes

(57) **Zusammenfassung**

Die Erfindung betrifft eine Vorrichtung zum Gruppieren und/oder Vereinzeln von Artikeln, die in wenigstens einer Reihe in einem im Wesentlichen geschlossenen Strom auf einer Fördereinrichtung (10) entlang einer Transportebene transportiert und durch mindestens einen von unten quer zur Transportebene in den Strom einführbaren Einteilfinger (16) längs zur Förderrichtung (t) gruppiert werden. Der Einteilfinger (16) greift derart in den Strom der Artikel ein, dass ein erfasster Artikel sowie die sich daran anschließenden weiteren Artikel während ihrer Vorwärtsbewegung längs zur Förderrichtung (T) unter Ausbildung einer Lücke wenigstens geringfügig verzögert oder beschleunigt sind. Der an einem seitlichen Rand an einer Mantelfläche des Artikels angreifende Einteilfinger (16) weist eine zur Mantelfläche weisende und zumindest teilweise an dieser anliegende und/oder diese teilweise umfangende Anlagefläche (26) auf.

## Beschreibung

Die Erfindung betrifft eine Vorrichtung zum Gruppieren und/oder Vereinzeln von in Reihen transportierten Artikeln mit den Merkmalen des Oberbegriffs des unabhängigen Anspruchs 1.

Derartige Gruppierungs- bzw. Vereinzelungsvorrichtungen werden bspw. im Zulaufbereich von Verpackungsmaschinen verwendet, die Getränkebehälter und - flaschen in Kartons oder Flaschenkästen einsetzen. Die zur Aufnahme der Getränkebehälter bzw. -flaschen vorgesehenen quaderförmigen Transportbehälter werden in der Regel in einer geschlossenen, d.h. lückenlosen Reihe ohne Zwischenabstände zugeführt. Die in Förderrichtung sowie die in Gegenrichtung weisenden planparallelen Seitenflächen der quaderförmigen Transportbehälter berühren einander unmittelbar. Unabhängig davon, ob die zu versorgende Verpackungsmaschine taktweise oder kontinuierlich arbeitet, müssen die der Maschine zulaufenden Behälter in Transportrichtung entweder einzeln oder zumindest gruppenweise auf definierte Abstände gebracht werden.

Zu diesem Zweck können beispielsweise von unten in die Transportbahn gesteuert einführbare Trennrollen, Stößel oder dgl. eingesetzt werden, die mit einem der Behälter an seiner Unterseite in Eingriff gelangen und diesen um ein bestimmtes Maß von der Förderebene weg nach oben anheben. Auf diese Weise wird eine Lücke geschaffen, um entweder mit der Rückseite des voraus laufenden Behälters oder der Vorderseite des nachlaufenden Behälters in Eingriff zu gelangen, so dass ein in der zunächst ununterbrochenen Reihe voraus laufender Behälter beschleunigt und/oder ein nachfolgender Behälter abgebremst werden kann, wodurch eine Vereinzelung oder Gruppierung von Behältern durch eine Abstandsvergrößerung in Transportrichtung herbeiführbar ist. Im weiteren Verlauf werden die Trennrollen oder Stößel aus der Transportbahn nach unten in eine Position gebracht, bei der sie aus dem Eingriff mit den Behältern gelangen. Allerdings führen diese bekannten Einteil- bzw. Gruppierungsmechanismen zu einer Beunruhigung des Behälterzulaufs und können zudem eine erhebliche Geräuschentwicklung mit sich bringen. Weiterhin werden die Behälter mechanisch relativ stark beansprucht, so dass diese in ungünstigen Fällen sogar beschädigt werden können.

Vorrichtungen, bei denen zum Vereinzeln oder Gruppieren von quaderförmigen Artikeln eine zur Transportebene senkrechte Hubbewegung der Gegenstände ausgeführt wird, sind beispielsweise aus der DE 21 43 910 C2, aus der DE 25 40 985 A1, aus der DE 28 50 456 A1, aus der DE 31 44 449 A1, aus der DE 39 38 548 A1, aus der DE 41 14 475 A1 sowie aus der DE 10 2004 042 474 A1 bekannt.

Die DE 298 07 979 U1 beschreibt weiterhin eine Vorrichtung zum Gruppieren oder Vereinzeln von Artikeln, die in einer oder mehreren geschlossenen Reihen auf einem Förderband transportiert und zum Weiterbehandeln einzeln oder gruppenweise auseinander gezogen werden. Hierbei sind zwei unabhängig voneinander parallel zur Transportrichtung vor und zurück verfahrbare Elemente vorhanden, die mit den Artikeln gesteuert in oder außer Eingriff gebracht werden. Die Elemente nehmen bei einer Vorwärtsbewegung in Transportrichtung eine in die Transportbahn der Artikel eingreifende Arbeitsstellung ein und sind bei einer Rückwärtsbewegung auf der gleichen Bewegungsbahn entgegen der Transportrichtung in eine zu den Artikeln beabstandete Bereitschaftsstellung überführbar. Bei einem mehrspurigen Artikelstrom sind jeder Förderspur zwei unabhängig voneinander verfahrbare Elemente zugeordnet.

Aus der DE 603 00 115 T2 ist eine Vorrichtung zum Trennen, Vereinzeln bzw. Gruppieren von kontinuierlich zugeführten Produkten bzw. Flaschen bekannt, bei dem ein als Zuführband ausgebildetes Förderband und Trennmittel zur Gruppierung der Flaschen vorgesehen sind.

Die EP 1 247 769 A1 beschreibt eine weitere Gruppierungsvorrichtung für Flaschen o. dgl. Artikel, die auf einem horizontalen Förderband transportiert werden. An einem endlos umlaufenden Zugmittel unterhalb der Transportebene sind Einteilfinger angeordnet, die von unten zwischen die Flaschen eintauchen und diese während ihrer horizontalen Bewegung in Transportrichtung derart gegenüber dem Förderband verzögern, dass Lücken entstehen. Je nach der Einteilung bzw. dem Abstand der Mehrzahl von Einteilfingern entstehen die gewünschten Gruppen von zwei, drei oder mehr gegenüber der Transportgeschwindigkeit der übrigen Flaschen verzögerten Flaschen. Die Einteilfinger sind jeweils paarweise angeordnet und greifen innerhalb einer Transportgasse jeweils beidseitig an untere Abschnitte der Mantelflächen der Flaschen.

Bei den bekannten Gruppierungsvorrichtungen mit von unterhalb einer Transportebene auftauchenden Einteilelementen bzw. -fingern ist die exakte Platzierung der Finger zwischen die voneinander zu trennenden Flaschen sehr wichtig, wobei auch bei sehr exakter Positionierung oftmals eine unerwünschte und die Präzision der Prozesse störende leichte Verschiebung der Flaschen während des Eintauchvorgangs der Finger unvermeidlich ist. Andererseits müssen die Einteilfinger eine gewisse Stärke aufweisen, da ansonsten die Gefahr bestünde, dass einzelne Flaschen an den senkrecht stehenden Einteilfingern vorbei geschoben werden.

Ein Ziel der vorliegenden Erfindung besteht darin, eine Vorrichtung zum Gruppieren und/oder Vereinzeln von Artikeln derart weiterzubilden, dass einerseits die Zuverlässigkeit der Gruppierung der Artikel erhöht wird, und dass andererseits unterschiedlich geformte und/oder unterschiedlich große Artikel gleichermaßen und mit gleicher Zuverlässigkeit gruppiert werden können.

Dieses Ziel der Erfindung wird mit dem Gegenstand des unabhängigen Anspruchs erreicht. Merkmale vorteilhafter Weiterbildungen der Erfindung ergeben sich aus den abhängigen Ansprüchen.

Die Erfindung umfasst eine Vorrichtung zum Gruppieren und/oder Vereinzeln von Artikeln, die in wenigstens einer Reihe in einem im Wesentlichen geschlossenen Strom auf einer Fördereinrichtung entlang einer Transportebene transportiert und durch mindestens einen von unten quer zur Transportebene in den Strom einführbaren Einteilfinger längs zur Förderrichtung gruppiert werden. Der wenigstens eine Einteilfinger greift dabei derart in den Strom der Artikel ein, dass ein erfasster Artikel sowie die sich daran anschließenden weiteren Artikel während ihrer Vorwärtsbewegung längs zur Förderrichtung unter Ausbildung einer Lücke entweder wenigstens geringfügig verzögert oder beschleunigt werden, wodurch die Abtrennung der entsprechend beeinflussten Artikelgruppe vom übrigen Artikelstrom erreicht wird. Gemäß der vorliegenden Erfindung weist der an einem seitlichen Rand an einer Mantelfläche des Artikels angreifende Einteilfinger eine zur Mantelfläche weisende und zumindest teilweise an dieser anliegende und/oder diese teilweise umfangende Anlagefläche auf. Besonders günstig werden die Treffgenauigkeit und Führungseigenschaften der Einteilfinger beeinflusst, wenn diese zumindest über eine Länge, an der sie an der Mantelfläche des Artikels anliegen, einen dreieckförmigen Querschnitt aufweisen. Der Einteilfinger kann dadurch mit der Grundfläche seiner dreieckigen Form an der Mantelfläche des Artikels bzw. an einer seitlichen Kante der Mantelfläche des Artikels anliegen. Die Anlagefläche des Einteilfingers ist bei dieser Gestaltung durch die Grundfläche des im Querschnitt gebildeten Dreiecks gebildet.

Bei einer vorteilhaften Ausführungsvariante der erfindungsgemäßen Vorrichtung sind jeder Reihe von Artikeln jeweils zwei parallele Einteilfinger zugeordnet, die jeweils am seitlichen Rand der Reihe angeordnet sind, so dass sie jeweils an beiden Seiten der Artikel angreifen, die an seitlichen Führungsblechen zur Bildung der Gassen entlang gleiten. Die beidseitige Führung der Artikel durch paarweise angeordnete Einteilfinger erhöht die Zuverlässigkeit der Einteilung und Gruppierung. Allerdings kann es für den gewünschten Zweck auch ausreichen, in jeder Reihe von Artikeln jeweils nur an einer Seite mit einzelnen Einteilfingern zu arbeiten.

Vorzugsweise weist jeder Einteilfinger einen Sockelbereich auf, mit dem er auf einem umlaufenden Träger fixierbar ist, der die Bewegungsbahn der Einteilfinger steuert. Weiterhin können die Einteilfinger zumindest an ihren den Artikeln zugewandten Kanten abgerundet sein, so dass sie beim Auftauchen von unterhalb der Transportebene sowie beim Gleiten entlang der Mantelflächen der Artikel dort nicht verhaken können oder zu unerwünschten Kratzspuren an den Artikelwänden führen. Da als Artikel insbesondere streckblasgeformte PET-Behälter zur Aufnahme von Getränken zum Einsatz kommen, sind abgerundete Kanten an den normalerweise aus Leichtmetall gefertigten Einteilfingern besonders wichtig, um Kratzspuren an den Behältern bzw. Kunststoffflaschen zu vermeiden. Wahlweise können die Einteilfinger auch aus Stahl, Kunststoff oder einem anderen geeigneten Werkstoff bestehen. Auch können Kunststoffbeschichtungen oder -überzüge vorgesehen sein, um den Einteilfingern gewünschte Oberflächen- oder Gleiteigenschaften zu verleihen.

Vorzugsweise sind die Einteilfinger jeweils auch im Übergangsbereich zum Sockelabschnitt abgerundet, so dass auch dort keine ausgeprägten Kanten vorhanden sind.

Wahlweise kann die dem Artikel zugewandte Anlagefläche des Einteilfingers im Querschnitt konkav geformt sein, so dass diese konkave Anlagefläche an die äußere Formgebung der Artikel angepasst ist und deren Mantelfläche zumindest teilweise umfängt.

Wenn im vorliegenden Zusammenhang allgemein von Artikeln die Rede ist, so können damit quaderförmige Artikel aller Art, jedoch insbesondere auch Getränkebehälter, Flaschen o. dgl. gemeint sein. Diese Artikel sind vorzugsweise alle gleichartig und von gleichen Abmessungen und gleicher Größe, damit sie problemlos in Gruppen gleichartiger Artikel, Flaschen o. dgl. zusammengefasst werden können. Besonders geeignet sind quaderförmige Flaschen mit abgerundeten Seitenkanten, da die dadurch gebildeten Geometrien eine besonders exakte Einteilung mittels der erfindungsgemäßen Vorrichtung und der darin eingesetzten Einteilfinger ermöglichen.

Die zwischen einzelne Artikel der ununterbrochenen Reihe eingreifenden Einteilfinger können jeweils zumindest zeitweise gegenüber der Transportbahn verzögerte Bewegungsbahnen aufweisen. Wahlweise können sie zumindest kurzzeitig eine gegenüber der Transportbahn beschleunigte Bewegungsbahn aufweisen. Auf diese Weise ist es möglich, eine Gruppe von gruppierten Artikeln mittels der Einteilfinger in Transportrichtung zumindest kurzzeitig zu verzögern und damit von der vorhergehenden, nicht verzögerten weiteren Gruppe von gruppierten Artikeln zu separieren. Dies sorgt für eine zuverlässige Gruppierung ohne Abstände der Artikel einer Gruppe untereinander.

Dadurch, dass die Einteilfinger zumindest temporär gegenüber der Transportgeschwindigkeit des Förderbandes verzögert werden können, werden die Artikel daran gestaut. Erst nach einiger Zeit, kurz vor dem Abtauchen der Einteilfinger nach unten, werden die Trennelemente beschleunigt, wodurch der bremsende Effekt für die Artikel entfällt, so dass das Transportband die Artikel ebenfalls beschleunigen kann. Auf diese Weise werden die gewünschten Einteilabstände erzeugt. Die Trenneinheit mit den daran angeordneten Einteilfingern ist so ausgebildet, dass der mit ihr gegenüber der Transportbahn verzögerte Artikel solange gebremst wird, bis die Trenneinheit beschleunigt und schließlich nach unten aus dem Eingriff mit dem ersten Artikel einer Artikelgruppe von mindestens zwei aneinander stehenden Artikeln gebracht wird.

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt. Gleiche Bauteile weisen dabei grundsätzlich gleiche Bezugszeichen auf und werden teilweise nicht mehrfach erläutert.
Fig. 1 zeigt eine schematische Frontalansicht eines Ausführungsbeispiels einer Fördereinrichtung mit einer Vorrichtung zum Vereinzeln und/oder Gruppieren von Flaschen.
Fig. 2 zeigt eine weitere Ansicht der Fördereinrichtung gemäß Fig. 1 mit nach oben verschobenen bzw. verschwenkten Einteilfingern, die beidseitig an Mantelflächen der Flaschen anliegen.
Fig. 3 zeigt eine Draufsicht auf die Fördereinrichtung gemäß Fig. 2 von oben.
Fig. 4 zeigt eine schematische Perspektivansicht der Fördereinrichtung mit mehreren parallelen Reihen von gruppierten Flaschen.
Fig. 5 zeigt zwei verschiedene Ansichten einer ersten Ausführungsvariante eines Einteilfingers.
Fig. 6 zeigt zwei verschiedene Ansichten der ersten Ausführungsvariante des Einteilfingers in einer zur Variante gemäß Fig. 5 spiegelbildlichen Ausführung.
Fig. 7 zeigt zwei verschiedene Ansichten einer zweiten Ausführungsvariante des Einteilfingers.
Fig. 8 zeigt zwei verschiedene Ansichten der zweiten Ausführungsvariante des Einteilfingers in einer zur Variante gemäß Fig. 7 spiegelbildlichen Ausführung.

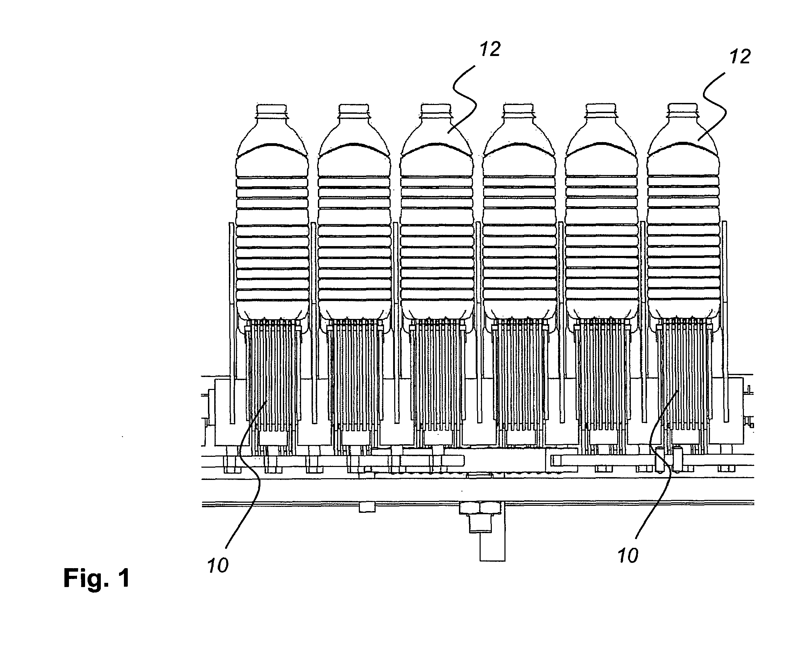

Anhand der schematischen Darstellungen der Figuren 1 bis 8 wird der Aufbau und die grundsätzliche Funktionsweise einer erfindungsgemäßen Vorrichtung zur Gruppierung und/oder Vereinzelung von Artikeln am Beispiel der Gruppierung von Getränkebehältern bzw. Flaschen sowie die Verfahrensschritte bei einer solchen Gruppierung näher erläutert.

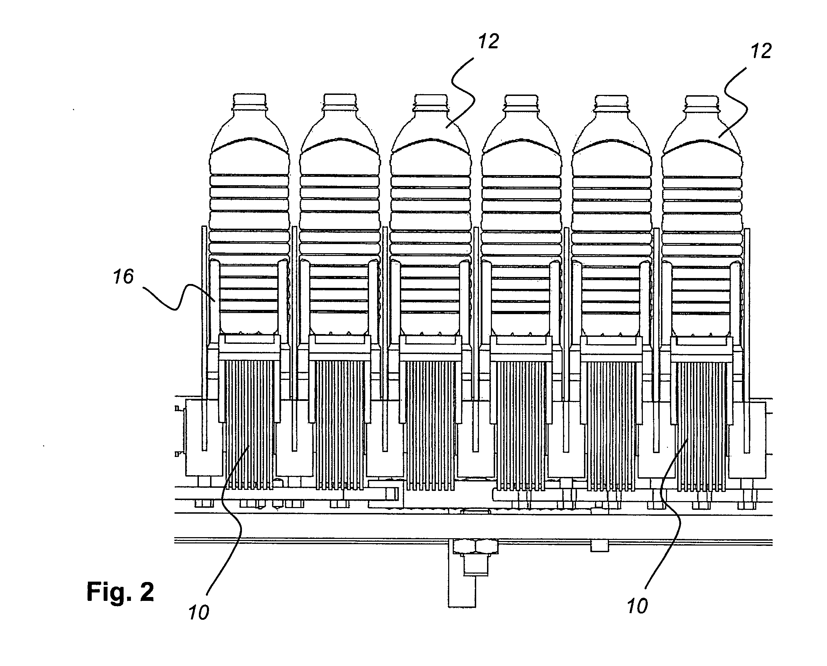

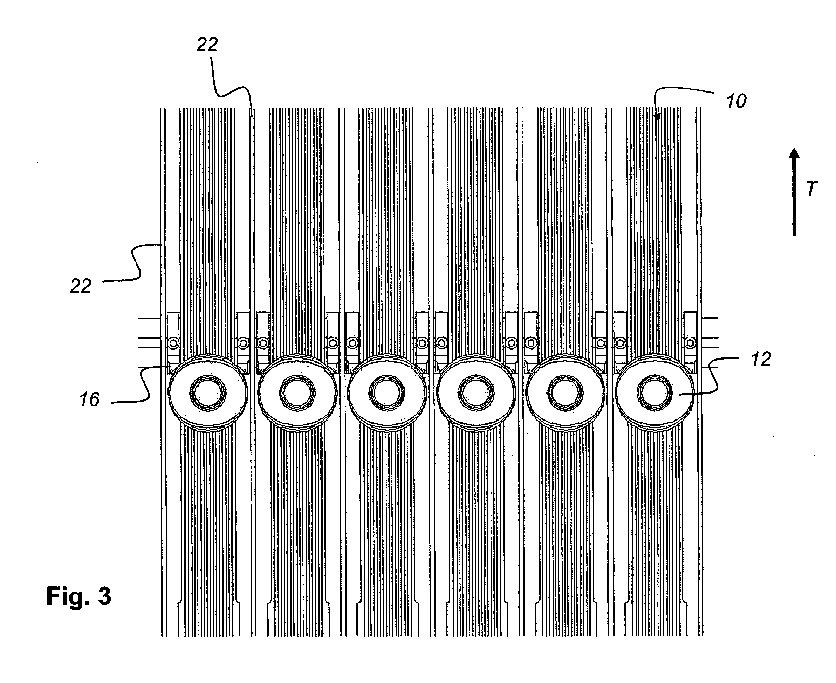

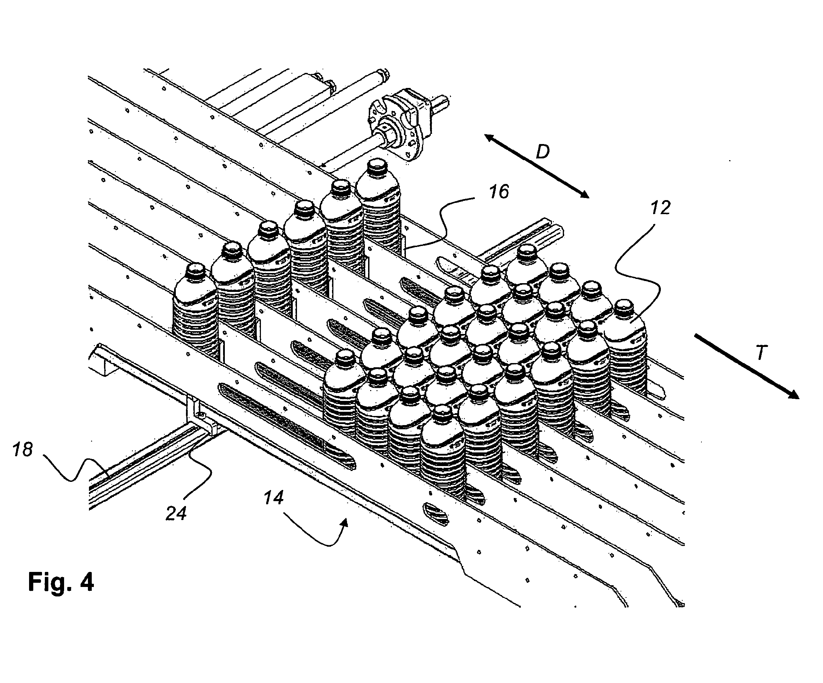

Auf sechs parallelen Transportbändern 10 werden jeweils ununterbrochene Reihen von Flaschen 12 in Transportrichtung T befördert (vgl. Figuren 3 und 4). Zur Weiterverarbeitung der Flaschen 12, bspw. zu deren Verpackung in einer nachfolgenden Packstation (nicht dargestellt) kann es notwendig sein, die Flaschen 12 in einer gewünschten Anzahl zu gruppieren. Bei der Gruppierung werden die zunächst reihenweise und ohne Zwischenräume hintereinander auf dem Transportband 10 beförderten Flaschen 12 in Gruppen 14 von jeweils zwei, drei oder mehr Flaschen 12 unterteilt (vgl. Fig. 4), die von einer darauf folgenden Gruppe 14 von weiteren zwei, drei oder mehr Flaschen 12 um einen definierten Abstand D abgerückt wird. Die Gruppierung erfolgt mit Hilfe mehrerer Einteilfinger 16, die senkrecht von unterhalb des Transportbandes 10 in regelmäßigen Abständen zwischen die Flaschen 12 eingreifen und auf diese Weise die Gruppen 14 bilden, wie dies in den Figuren 2, 3 und 4 erkennbar ist. In der Darstellung der Fig. 1 sind dagegen die Einteilfinger 16 noch nicht zwischen die in der Zeichnungsebene verdeutlichten Flaschen 12 nach oben geschoben worden.

Die Oberfläche des Transportbandes 10 ist vorzugsweise so ausgestaltet, dass die Flaschen 12 darauf problemlos gleiten und damit durch die Trenneinheiten 16 verzögert werden können. Andererseits sollen die Flaschen 12 beim Abtauchen der Trenneinheiten 16 nach unten ohne nennenswerte Verzögerung und weitgehend schlupffrei auf die Transportgeschwindigkeit des Transportbandes 10 beschleunigt werden.

Wie in Fig. 4 angedeutet, sind jeweils alle parallelen Einteilfinger 16 der sechs Förderbänder 10 jeweils auf einer gemeinsamen Trägerschiene 18 fixiert, bspw. durch eine Verschraubung. Diese Trägerschiene 18 wird parallel zum Transportband 10 und unterhalb dessen Oberfläche mit verzögerter bzw. variabler Geschwindigkeit bewegt, wobei die Einteilfinger 16 an einer gewünschten Position nach oben geschoben und nach erfolgter Gruppierung der Flaschen 12 wieder nach unten gezogen werden. Die Einteilfinger 16 tauchen weitgehend senkrecht zur Transportrichtung T von unterhalb des Transportbandes 10 über dessen Niveau und zwischen die einzelnen Flaschen 12, so dass bei diesem Eintauchen keine nennenswerte Verschiebung der Gruppen 14 voneinander erfolgt. Dieses senkrechte Eintauchen von unten kann bspw. durch eine geeignete gelenkige Lagerung der Trenneinheiten 16 an einem mit konstanter Geschwindigkeit umlaufenden Endlos-Zugmittel und der dadurch transportierten Trägerschienen 18 und einer geeigneten zusätzlichen Führung der Einteilfinger 16 gewährleistet werden, die für ein gewünschtes Verschwenken der Einteilfinger 16 während ihrer Bewegung sowie für die gewünschte Beschleunigung der Einteilfinger 16 kurz vor deren Abtauchen sorgen kann. Die Umlaufgeschwindigkeit des Zugmittels mit den dadurch bewegten Trägerschienen 18 ist so auf die Transportgeschwindigkeit des Transportbandes 10 abzustimmen, dass die gewünschten Gruppierungen der Flaschen 12 erfolgen können.

Wie in Fig. 3 angedeutet, stehen jeweils zwei Einteilfinger 16 gleichzeitig im Eingriff mit jeder Flasche 12. Die beiden jeder Flasche 12 zugeordneten parallelen Einteilfinger 16 sind jeweils am seitlichen Rand der entsprechenden Transportgasse 20 angeordnet, so dass sie jeweils an beiden Seiten der Flaschen 12 angreifen, die an seitlichen Führungsblechen 22 zur Bildung und Begrenzung der Gassen 20 entlang gleiten. Die beidseitige Führung der Flaschen 12 durch paarweise angeordnete Einteilfinger 16 erhöht die Zuverlässigkeit der Einteilung und Gruppierung.

Wie in den Figuren 4 bis 8 verdeutlicht, weist jeder Einteilfinger 16 einen Sockelbereich 24 auf, mit dem er auf dem umlaufenden Träger 18 fixierbar ist, der die Bewegungsbahn der Einteilfinger 16 steuert. Weiterhin sind die Einteilfinger 16 an ihren den Flaschen 12 zugewandten Kanten abgerundet, so dass sie beim Auftauchen von unterhalb der Transportebene sowie beim Gleiten entlang der Mantelflächen der Flaschen 12 dort nicht verhaken können oder zu unerwünschten Kratzspuren an den Flaschenwänden führen. Da die Flaschen 12 insbesondere streckblasgeformte PET-Behälter zur Aufnahme von Getränken sind, sind abgerundete Kanten an den normalerweise aus Leichtmetall gefertigten Einteilfingern 16 besonders wichtig, um Kratzspuren an den Kunststoffflaschen zu vermeiden. Wahlweise können die Einteilfinger 16 auch aus Stahl, Kunststoff oder einem anderen geeigneten Werkstoff bestehen. Auch können Kunststoffbeschichtungen oder -überzüge vorgesehen sein, um den Einteilfingern gewünschte Oberflächen- oder Gleiteigenschaften zu verleihen.

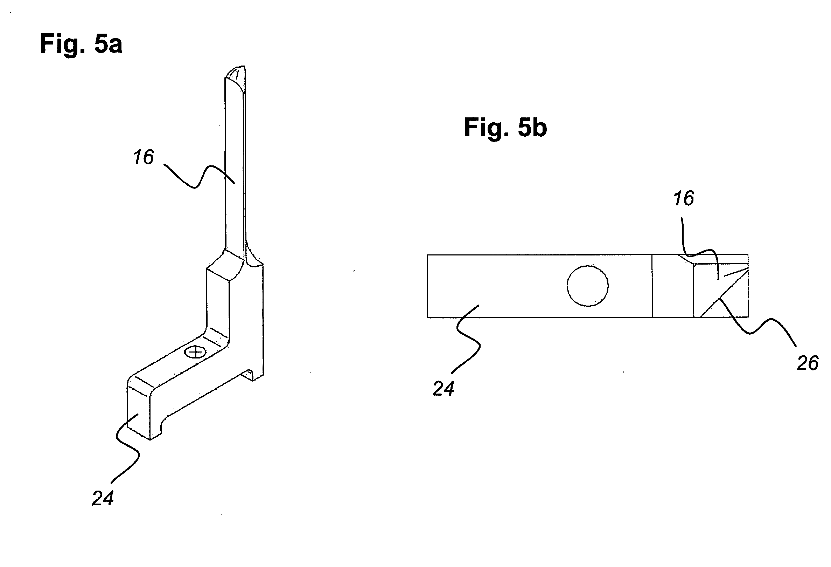

Wie in den verschiedenen Ausführungsbeispielen der Figuren 5 bis 8 erkennbar, ist jeder Einteilfinger 16 im Übergangsbereich zum Sockelabschnitt 24 abgerundet, so dass auch dort keine ausgeprägten Kanten vorhanden sind.

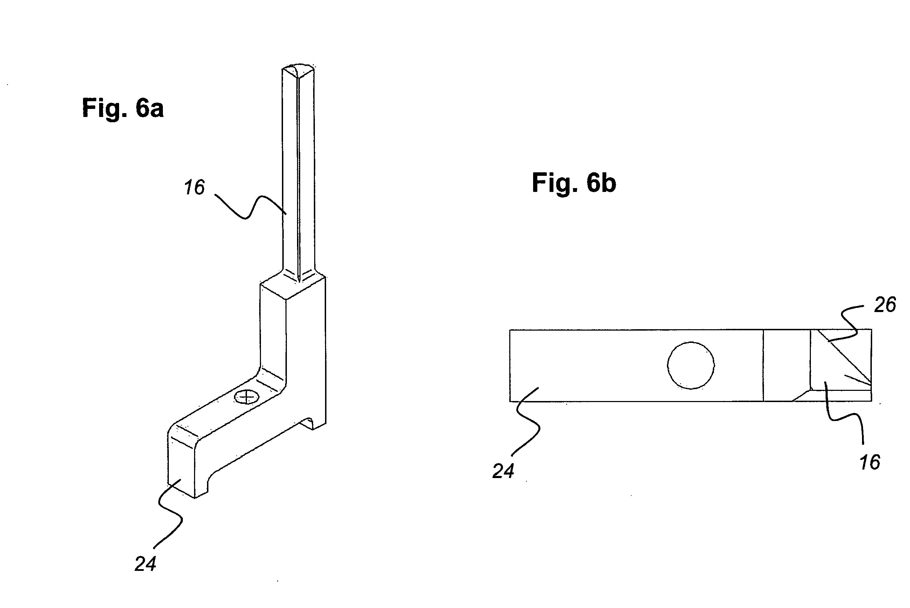

Die Figuren 5a, 5b, 6a und 6b verdeutlichen eine erste Ausführungsvariante mit im Querschnitt dreieckförmigem Einteilfinger 16, dessen Anlagefläche 26, die an der Mantelfläche der Flaschen 12 anliegt, plan ist. Die in den Figuren 5 und 6 gezeigten Einteilfinger 16 sind jeweils spiegelbildlich ausgebildet, so dass sie ein Paar bilden, das innerhalb einer Transportgasse 20 zur Führung einer Flasche 12 angeordnet ist.

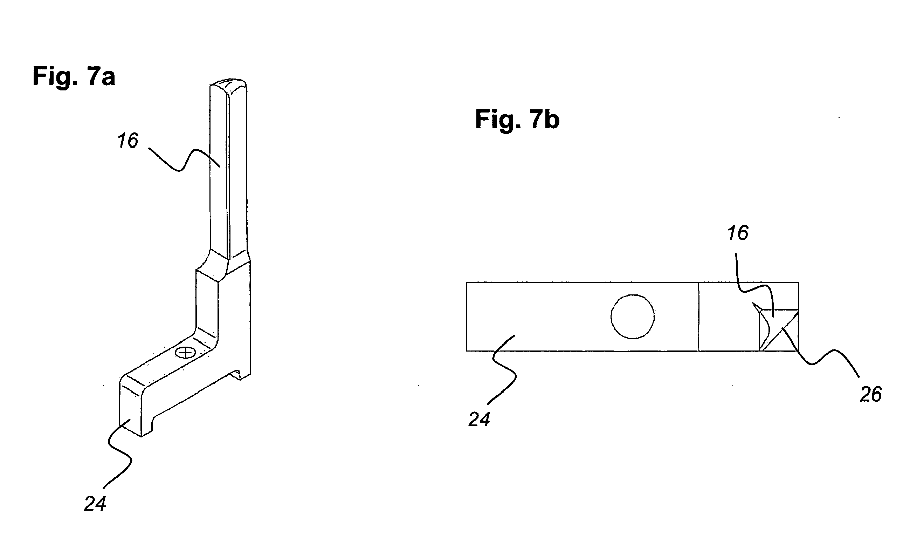

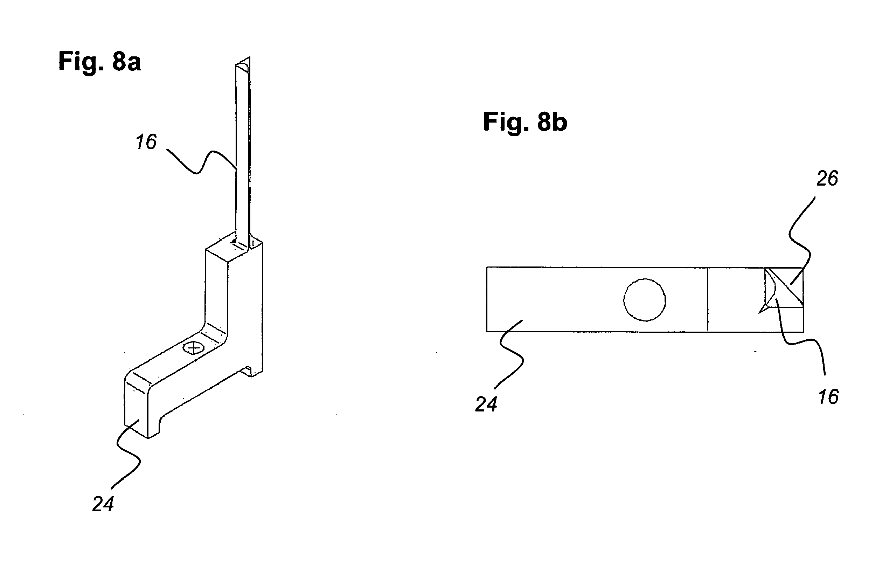

Wahlweise kann die den Flaschen 12 zugewandte Anlagefläche 26 des Einteilfingers 16 im Querschnitt konkav geformt sein, wie dies in den Figuren 7 und 8 verdeutlicht ist, so dass diese konkave Anlagefläche 26 an die äußere Formgebung der Flaschen 12 angepasst ist und deren Mantelfläche zumindest teilweise umfängt.

Der besondere Vorteil der beschriebenen Gruppierung mittels mindestens zwei Einteilfingern 16 besteht darin, dass sich die Flaschen 12 einer Gruppe 14 nicht voneinander lösen können, da sie zumindest von den beiden sie begrenzenden Einteilfingern 16 ohne Abstand voneinander zusammen gehalten, vorzugsweise jedoch gleichzeitig mittels der etwas langsamer als das Transportband 10 laufenden Einteilfingern 16 gegenüber dem Transportband 10 leicht verzögert und dadurch permanent zusammen geschoben werden.

Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

### Bezugszeichenliste

- 10: Transportband
- 12: Flasche
- 14: Gruppe
- 16: Einteilfinger
- 18: Trägerschiene
- 20: Transportgasse
- 22: Führungsblech
- 24: Sockelbereich
- 26: Anlagefläche

- D: Abstand
- T: Transportrichtung

## Patentansprüche

1. Vorrichtung zum Gruppieren und/oder Vereinzeln von Artikeln, die in wenigstens einer Reihe in einem im Wesentlichen geschlossenen Strom auf einer Fördereinrichtung (10) entlang einer Transportebene transportiert und durch mindestens einen von unten quer zur Transportebene in den Strom einführbaren Einteilfinger (16) längs zur Förderrichtung (t) gruppiert werden, wobei der Einteilfinger (16) derart in den Strom der Artikel eingreift, dass ein erfasster Artikel sowie die sich daran anschließenden weiteren Artikel während ihrer Vorwärtsbewegung längs zur Förderrichtung (T) unter Ausbildung einer Lücke wenigstens geringfügig verzögert oder beschleunigt sind, **dadurch gekennzeichnet, dass** der an einem seitlichen Rand an einer Mantelfläche des Artikels angreifende Einteilfinger (16) eine zur Mantelfläche weisende und zumindest teilweise an dieser anliegende und/oder diese teilweise umfangende Anlagefläche (26) aufweist.

2. Vorrichtung nach Anspruch 1, bei der der Einteilfinger (16) zumindest über eine Länge, an der er an der Mantelfläche des Artikels anliegt, einen dreieckförmigen Querschnitt aufweist.

3. Vorrichtung nach Anspruch 2, bei der der Einteilfinger (16) mit der Grundfläche seiner dreieckigen Form an der Mantelfläche des Artikels bzw. an einer seitlichen Kante der Mantelfläche anliegt.

4. Vorrichtung nach Anspruch 3, bei der die Anlagefläche (26) des Einteilfingers (16) durch seine Grundfläche gebildet ist.

5. Vorrichtung nach Anspruch 3 oder 4, bei der die Anlagefläche (26) des Einteilfingers (16) im Querschnitt gewölbt ausgebildet ist.

6. Vorrichtung nach einem der Ansprüche 1 bis 5, bei der jeder Reihe von Artikeln jeweils zwei parallele Einteilfinger (16) zugeordnet sind, die jeweils am seitlichen Rand der Reihe angeordnet sind.

7. Vorrichtung nach einem der Ansprüche 1 bis 6, bei der jeder Einteilfinger (16) einen Sockelbereich (24) aufweist, mit dem er auf einem umlaufenden Träger (18) fixierbar ist, der die Bewegungsbahn der Einteilfinger (16) steuert.

8. Vorrichtung nach einem der Ansprüche 1 bis 7, bei der der Einteilfinger (16) zumindest an den dem Artikel zugewandten Kanten abgerundet ist.

9. Vorrichtung nach Anspruch 7 oder 8, bei der der Einteilfinger (16) im Übergang zum Sockelbereich (24) abgerundet ist.

10. Vorrichtung nach einem der Ansprüche 1 bis 9, bei der die dem Artikel zugewandte Anlagefläche (26) des Einteilfingers (16) im Querschnitt konkav geformt ist.

11. Vorrichtung nach Anspruch 10, bei der die konkave Anlagefläche (26) an die äußere Formgebung der Artikel angepasst ist und deren Mantelfläche zumindest teilweise umfängt.
